# EUROPEAN PATENT APPLICATION

(11) **EP 4 053 657 A1**
(43) Date of publication of application: **07.09.2022**
(21) Application number: 22160240.2
(22) Date of filing: 04.03.2022
(51) Int. Cl.: G05B 19/418, G06Q 10/06, G06Q 50/04

(54) **METHOD FOR ALLOCATING RESOURCES TO MACHINES OF A PRODUCTION FACILITY**

(30) Priority: 05.03.2021 CN 202110245904
(71) Applicant: At&S (China) Co., Ltd., Shanghai 201108 (CN)
(72) Inventor: ZHOU, Yuan Fang, Shanghai (CN); LI, Hao, Shanghai (CN); BRENNER, Thomas, Shanghai, 201108 (CN)
(74) Representative: Qip Patentanwälte Dr. Kuehn & Partner mbB

(57) **Abstract**

A method for allocating resources (104) to machines (102) of a production facility (100) comprises: receiving forecast data (204) indicating planned demands (214) for the resources (104) and a demand deviation (216) for each resource (104); generating a new demand (220) for each resource (104) from the planned demand (214) and the demand deviation (216) of the resource (104) in several iterations; assigning capacities to the new demands (220) in each iteration by determining resource-machine combinations (106), wherein a priority is determined for each resource (104) and each machine (102) based on a set of priority rules (226; 226a, 226b, 226c, 226d, 226e), wherein the resource-machine combinations (106) are determined by combining the resources (104) and the machines (102) according to the priorities; and generating a roll-out plan (228) assigning resource-machine combinations (106) to be rolled out to future time periods, wherein the roll-out plan (228) is generated from the resource-machine combinations (106) of different iterations and an estimated roll-out time for each resource-machine combination (106) such that a total number of the resource-machine combinations (106) to be rolled-out is minimized.

## Description

### FIELD OF THE INVENTION

The invention relates to a method for allocating resources to machines of a production facility. Furthermore, the invention relates to a data processing device and a computer program for carrying out said method.

### BACKGROUND OF THE INVENTION

Large production facilities, such as production facilities for printed circuit boards, may comprise many different machines for manufacturing different types of products. The allocation of resources to the machines is a complex task, especially when the production facility comprises machines of different generations with different machining capabilities. In general, the allocation should be done in a reasonable time and should result in a good balance between on-time delivery and low maintenance cost.

WO 2019/075174 A1 relates to a method to control the manufacture process of semiconductor products in a plant. The process is controlled by a controller of a manufacture execution system. A target profile is specified based on historical performance data of the plant. The target profile may be generated based on operator experience, the current conditions of the plant and a wafer production plan based on customer demands. The target profile is computed using a simulator, based on current conditions of the plant.

US 2014/0143006 A1 relates to a system for fabricating semiconductor products includes a list of products to be fabricated, a list of available semiconductor fabrication tools, a product and tool matrix database, and a product and tool selection engine. The product and tool matrix database is configured to include performance and manufacturing information for the products to be fabricated and the available tools. The product and tool selection engine is configured to generate an enhanced matching of the products to be fabricated and the available semiconductor fabrication tools.

US 2014/0277677 A1 relates to a production processing system in which a plurality of processing tools for processing workpieces shares an equipment. The workpieces may be silicon wafers used to manufacture a semiconductor device. A group controller generates a use plan for the equipment based on at least a portion of a production execution control information and transmits it to a shared controller configured to control processing timings of the equipment.

US 6,633,788 B1 relates to a data processing method and a computer-based data processing system for use in providing a procedure for generating a product.

### DESCRIPTION OF THE INVENTION

It is an object of the invention to improve the allocation of resources to machines of a production facility. In particular, it is an object of the invention to improve on-time delivery, to reduce maintenance cost caused by re-equipping the machines and/or to maximize capacity utilization.

These objectives are achieved by the subject-matter of the independent claims. Further exemplary embodiments are evident from the dependent claims and the following description.

A first aspect of the invention relates to a method for allocating resources to machines of a production facility. As already mentioned, the production facility may produce circuit boards or more general component carriers for electronic and electric components.

A resource may be seen as a resource needed during production. For example, a resource may be a human resource, such as operators or experts, a material, a tool, or a combination of at least two of the mentioned examples.

The machines may be adapted for production, packaging, testing, automatic optic inspection, etc. For example, in the case of a circuit board production facility, the machines may include plating, etching, drilling and/or sawing machines. It may be that each machine is adapted for using one resource at a time, such that other resources are blocked from being used by the machine.

The method may be performed by a controller of a resource allocation system, which may be a component of a manufacturing execution system (MES). Additionally, the method may be performed as an individual program to simulate resource status. A manufacturing execution system may be a computerized system for tracking and documenting the transformation of raw materials through finished goods. The resource allocation system may be a possibly distributed computer system, which may be adapted for performing the method. The resource allocation system may comprise one or more databases.

The method comprises: receiving forecast data indicating planned demands for the resources and a demand deviation for each resource; generating a new demand for each resource from the planned demand and the demand deviation of the resource in several iterations; assigning capacities to the new demands in each iteration by determining resource-machine combinations, wherein a priority is determined for each resource and each machine based on a set of priority rules, wherein the resource-machine combinations are determined by combining the resources and the machines according to the priorities; and generating a roll-out plan assigning resource-machine combinations to be rolled out to future time periods, wherein the roll-out plan is generated from the resource-machine combinations of different iterations and an estimated roll-out time for each resource-machine combination such that a total number of the resource-machine combinations to be rolled-out is minimized.

The forecast data may comprise a list of items assigning planned demands and/or demand deviations to the respective resources. For example, each planned demand may be derived from an order specifying a desired production quantity and/or a desired delivery time for a specific type of product. It is also possible that the planned demands and/or the demand deviations are derived from historic data, market data and/or customer data. A demand deviation may be seen as a negative and/or positive deviation from the corresponding planned demand. It may be that the forecast data additionally comprise historic planned demands and historic actual demands for each resource and/or product. For example, the forecast data may be real-time data stored on a server.

It may be that, in each iteration, one or more new demands are generated for each planned demand. The new demands may be generated automatically from the forecast data. "Automatically", here and in the following, may mean "by a computer program".

For example, the new demand may be a random value selected by a random generator from a range defined by the respective planned demand plus and/or minus the respective demand deviation. The new demand may be calculated with a mathematical function and/or selected from a lookup table.

As an example, the forecast data may indicate that a specific resource will have a planned demand of n machine capacities at a specific time period, wherein a machine capacity of 1 indicates a capacity utilization of 100 percent of one machine. The forecast data may further indicate that the planned demand has a demand deviation of plus/minus *m*. Accordingly, a range of *n* plus/minus *m* may be used for generating the new demand.

The demand deviation may be derived from recorded data, i.e. historic data, regarding the respective resource.

In general, a planned and/or new demand may be a value defined in relation to the capacity of one machine. For example, a planned and/or new demand of "1" may correspond to a capacity utilization of 100 percent of one machine.

The resource-machine combinations may be determined by selecting items from a list of possible resource-machine combinations, wherein each resource and each machine may be associated with a priority. This list may optionally define an availability status for each possible resource-machine combination, such as "immediately available", "shortly available" or "possibly available". Additionally or alternatively, the availability status may comprise an estimated roll-out time for each possible resource-machine combination, which, for example, may be specified in hours, days and/or months.

As another example, each resource-machine combination may be associated with one of the following availability levels: 1) online ready; 2) parameter ready, i.e., transferable to online ready within several days; 3) possible to use, i.e., transferable to online ready within several weeks.

A roll-out time may be a lead time required to equip a specific machine with a specific resource, i.e., to implement a specific tool-machine combination.

Each resource-machine combination may be a combination of one of the resources and one of the machines. Each resource-machine combination within an iteration may be a unique combination.

The priority of each resource and/or each machine may be calculated in each iteration by applying a set of priority rules to the respective items of the list of possible resource-machine combinations. For calculating the priority, the priority rules may be applied in a specific order. In general, the priority rules may be used to quantify an availability, scarcity and/or processing urgency with respect to a resource and/or machine of the production facility. In contrast to embodiments where the priorities are determined randomly, e.g., based on a Monte Carlo algorithm, such a set of priority rules makes it possible to generate the priorities in a controlled and reproducible manner.

It may be that the resource-machine combinations are generated one after another in a descending order beginning with the resource and the machine that have the highest priority. The result of an iteration may be a sorted list of resource-machine combinations. Each resource-machine combination in the sorted list may be associated with an identifier and, optionally, with further information defining a capacity utilization of the respective machine, a remaining capacity of the respective machine and/or a remaining demand for the respective resource. The resource-machine combinations may be generated such that the remaining capacity of each machine and/or the remaining demand of each resource is reduced to a defined minimum, which, for example, may be zero.

The priorities of the resources and the machines may be determined automatically based on the set of priority rules and/or the forecast data.

The resource-machine combinations may be determined automatically based on the priorities and/or the forecast data.

It is possible that the new demands are generated in at least a hundred iterations or even in at least a thousand iterations. In other words, the steps of generating new demands and assigning capacities to the new demands may each be performed at least a hundred times or even at least a thousand times.

After determining suitable resource-machine combinations for satisfying the planned and/or new demands, a roll-out plan needs to be determined. In general, the roll-out plan may specify which machines have to be provided with which resources at which future time period. A future time period may be a calendar week, a month, etc. In a simple case, the roll-out plan may be a schedule, such as a daily, weekly and/or monthly schedule, that assigns resource-machine combinations to be rolled out to specific time periods in the future. A resource-machine combination to be rolled out may be seen as a resource-machine combination that requires a certain maintenance and/or service time before being operational.

The roll-out plan may be generated automatically based on the results of different iterations and/or based on the forecast data.

The generation of the roll-out plan may be performed regularly, e.g. on a daily, weekly and/or monthly basis, and an already generated roll-out plan may be updated.

As an example, after a first run, a roll-out plan in the following format may be generated:

| Week | Machine | Tooling |
|---|---|---|
| 2020ww51 | 8124 | T159 |
| 2020ww51 | 8105 | T62 |

This means that resources in the form of tooling T159 and T62, which may also be called tools, need to be prepared in calendar week 51, e.g., by transferring them from "parameter ready" to "online ready". In a second run, these two items would be marked as "online ready". As a result, they would not appear in the roll-out plan generated in the second run, since they would already have been rolled out.

It may be that the roll-out plan comprises at least two subsequent sequences of time periods, wherein each sequence may be generated based on one or more iterations. For example, a first sequence may comprise resource-machine combinations which are transferable from "parameter ready" to "online ready", whereas a second sequence of the roll-out plan may additionally comprise resource-machine combinations which are "possible to use".

In particular, the roll-out plan is generated such that a total number of the resource-machine combinations to be rolled-out is minimized.

At least one alternative method may be used for setting the priorities, such as choosing one winner from several random priorities or manually defining fixed priorities. The method to be used may be chosen according to a roll-out result.

According to an embodiment of the invention, the set of priority rules comprises a first priority rule for determining the priority of each resource depending on whether or not the resource can be provided by an external supplier, such that resources which can be provided by an external supplier have lower priorities than resources which cannot be provided by an external supplier. This means that the first priority rule may be used to make a distinction between demands that must be satisfied by the production facility and demands that possibly can be satisfied by at least one external supplier, e.g., by one or more other production facilities. The first priority rule may be applied based on a supplier list that specifies possible external suppliers for each resource. In this way, the total number of resource-machine combinations to be rolled out in the production facility can be significantly reduced. In particular, the first priority rule may be configured such that the resources which can be provided by an external supplier are not taken into account when the roll-out plan is generated.

According to an embodiment of the invention, the machines of the production facility are assigned to different machine categories, wherein machines of a lower machine category have a lower machining precision and/or are compatible with a lower number of resources than machines of a higher machine category. Accordingly, the set of priority rules may comprise a second priority rule for determining the priority of each machine depending on the machine category of the machine, such that machines of a lower machine category have higher priorities than machines of a higher machine category. For example, the machines of different machine categories may be machines of different machine generations, wherein machines of a lower machine category may be older machines and machines of a higher machine category may be newer machines. In this case, the newer machines may have a higher machining precision and/or may be adapted for producing a wider range of products than the older machines. It is also possible that the machines of the highest machine category are adapted for producing relatively complex products and/or for taking over production tasks of at least one of the remaining machine categories. Inversely, the machines of the lowest machine category may only produce relatively simple products. There may be at least two or, preferably, at least three different machine categories for categorizing the machines of the production facility. Each machine may be assigned to one or more machine categories. With this embodiment, the allocation of resources to machines of a very large production facility, which normally comprises a lot of machines of different generations, can be significantly improved.

According to an embodiment of the invention, a number of available machines is determined for each resource. The set of priority rules comprises a third priority rule for determining the priority of each resource depending on the number of available machines for the resource, such that resources with lower numbers of available machines have higher priorities than resources with higher numbers of available machines. An available machine may be a machine which actually uses and/or may potentially use the respective resource. In other words, the priority of a resource may depend on its compatibility with the machines of the production facility, i.e., on the number of machines with which the resource is actually combined and/or may potentially be combined.

According to an embodiment of the invention, a number of available resources is determined for each machine. Accordingly, the set of priority rules may comprise a fourth priority rule for determining the priority of each machine depending on the number of available resources for the machine, such that machines with lower numbers of available resources have higher priorities than machines with higher numbers of available resources. An available resource may be a resource with which a machine is actually combined and/or may potentially be combined. For example, the production facility may comprise machines that can only be combined with one specific resource, e.g. one specific tool, or with a relatively small number of different resources. With this embodiment, capacity utilization of such specialized machines can be improved.

According to an embodiment of the invention, the set of priority rules comprises a fifth priority rule for determining the priority of each resource depending on the planned and/or new demand for the resource, such that resources with lower planned and/or new demands have higher priorities than resources with higher planned and/or new demands. In case of a conflict between resources with lower demands and resources with higher demands, it is advantageous to first assign capacities to the lower demands since this may reduce the total number of resource-machine combinations to be rolled-out.

It may be that the priority rules, as described above and below, are applied in a predefined order for determining the respective priorities of the resources and the machines.

According to an embodiment of the invention, the first, second, third, fourth and fifth priority rule may be applied one after another according to their ordinal number beginning with the first priority rule. It is also possible that the fourth priority rule is applied before the third priority rule.

Generally, the order in which the priority rules are applied may vary depending on a use case. For example, an alternative use case may be improving delivery for specific products.

According to an embodiment of the invention, the new demand of each resource is generated by randomly selecting a value from a demand range defined by the planned demand and the demand deviation of the resource. As already mentioned above, the new demands may be generated, at least partially, from probability distributions, which may be determined from historic demand variations with respect to the corresponding resources. The demand deviations may be calculated from historic demands and/or historic output quantities, which may be included in the forecast data. Alternatively, the demand deviations may be predefined values and/or may be provided together with the planned demands in the forecast data. In this way, the number of resource-machine combinations which may potentially be used for generating the roll-out plan can be significantly increased. Thus, the degrees of freedom for optimizing the allocation are increased.

According to an embodiment of the invention, the demand deviations are calculated from historic planned demands and historic actual demands with respect to the historic planned demands. The demand deviations may be updated regularly, e.g. on a daily, weekly and/or monthly basis, based on the corresponding historic planned and/or actual demands. For example, the demand deviation for each resource may be calculated from a difference between the historic planned demand and the historic actual demand for the resource over one or more time periods in the past. In this way, the demand deviations can be determined with high accuracy.

According to an embodiment of the invention, the resource-machine combinations in a current iteration are determined depending on resource-machine combinations from a previous iteration. It may be that the resource-machine combinations resulting from the previous iteration may have a certain availability status such as, for example, "immediately available", "shortly available", "possibly available", "online ready", "parameter ready" or "possible to use". In the following iteration, the resource-machine combinations may be determined and/or updated depending on the respective availability status of the resource-machine combinations from the previous iteration.

According to an embodiment of the invention, each resource is a specific tool to be used by at least one of the machines for producing a specific type of product. Such a tool may be a plating, etching, drilling and/or sawing tool. In particular, the tool may be used for producing a circuit board.

According to an embodiment of the invention, each machine is a laser drilling machine adapted for drilling holes in printed circuit boards. In this case, a resource may be a laser drilling tool, which may differ from product to product. It may be that each laser drilling machine can only use one laser drilling tool at a time.

A second aspect of the invention relates to a data processing device comprising means for carrying out the method according to an embodiment of the first aspect of the invention. The data processing device may be a computer, e.g. a controller of a resource allocation system and/or manufacturing execution system, comprising a processor for executing a computer program and a memory for storing the computer program. The method may be carried out by executing the computer program. It has to be understood that features of the method as described above and below may be features of the data processing device as described above and below, and vice versa.

A third aspect of the invention relates to a computer program comprising instructions which, when being executed by a computer, cause the computer to carry out the method according to an embodiment of the first aspect of the invention.

A fourth aspect of the invention relates to a computer-readable medium having stored thereon such a computer program. The computer program may be stored in and/or executed by one or more computing devices of the resource allocation system and/or manufacturing execution system.

A computer-readable medium may be a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a volatile or non-volatile medium.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows a production facility.
Fig. 2 schematically shows a resource allocation system adapted for allocating resources to machines in a method according to an embodiment of the invention.
Fig. 3 shows a flow diagram for a method according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

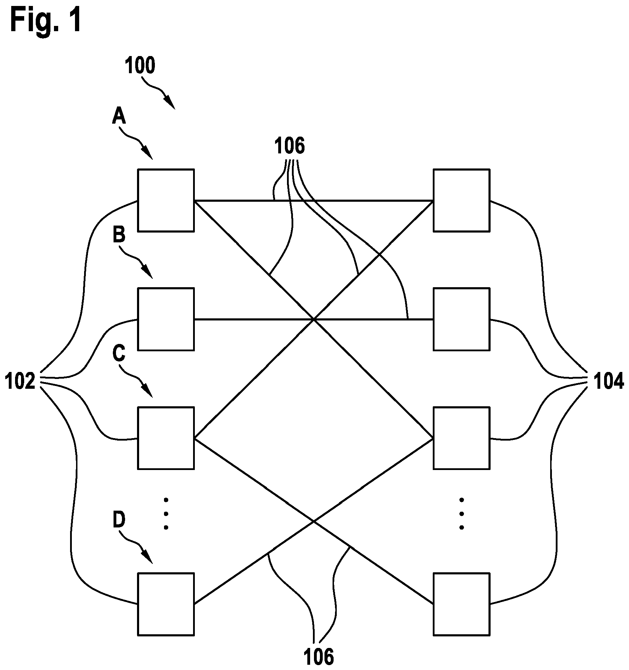

Fig. 1 shows a production facility 100 with a plurality of machines 102. In this example, the production facility 100 produces circuit boards and the machines 102 are laser drilling machines for drilling holes through the circuit boards. However, any other types of production facilities and/or machines are possible. The machines 102 may be combined with different resources 104, which, in this example, are different laser drilling tools 104. Depending on the number of machines 102 and tools 104, there may be many possible tool-machine combinations 106, e.g. more than 1000 or even more than 10000. Depending on a demand for each tool 104, the tool-machine combinations 106 should be determined such that the demands can be satisfied on time with reasonable maintenance cost. Thus, the task of determining the most suitable tool-machine combinations 106 may be very complex, such that a human would not be able to perform this task in reasonable time.

Each machine 102 may be assigned to one of a plurality of machine categories A, B, C, D. In this example, machine category A comprises the newest machines and/or the machines that are capable of producing the widest range of products, whereas machine category D comprises the oldest machines and/or the machines that are capable of producing the smallest range of products. However, it is also possible that all machines 102 of the production facility 100 are of the same type and/or generation.

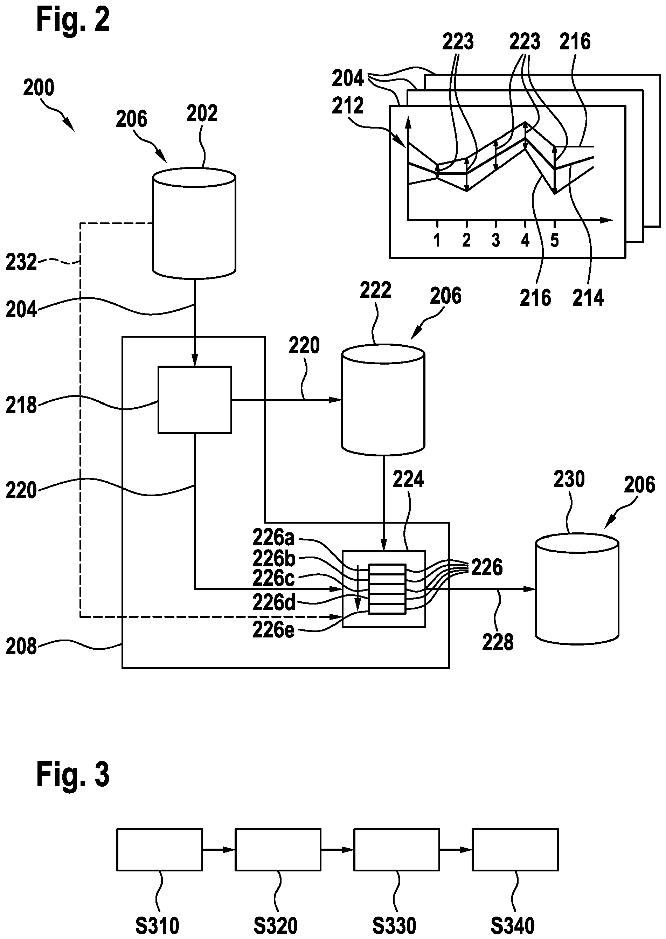

Fig. 2 shows a resource allocation system 200 for automatically allocating the tools 104 to the machines 102 of the production facility 100. For example, the resource allocation system 200 may be a maintenance execution system or a component of a maintenance execution system. In this example, the resource allocation system 200 comprises a database 202 with forecast data 204. The database 202 may be a relational database and/or may be stored on a central server 206, e.g. an SQL server.

The resource allocation system 200 further comprises a computer 208 for processing the forecast data 204. The computer 208 may be connected via a data communication network to the central server 206.

For example, the forecast data 204 may comprise a schedule 212 that assigns planned demands 214 and demand deviations 216 for the tools 104 to future time periods, which may be calendar weeks, months, etc.

The demand deviations 216 may be derived from historical planned demands and/or from historical actual demands for the respective tool 104. The historical planned demands and/or from historical actual demands may also be stored in the central server 206 and/or may be part of the forecast data 204.

The computer 208 may comprise a demand generator 218 configured for generating new demands 220 for each tool 104 from the corresponding planned demands 214 and the corresponding demand deviations 216 in several iterations. The resulting new demands 220 may be stored in a demand archive 222, which may be stored on the central server 206.

It may be that the new demands 220 for each tool 104 are generated by randomly selecting values from demand ranges 223 defined by the planned demands 214 and the demand deviations 216 with respect to the tool 104. Alternatively, the new demands 220 may be fixed values, which may correspond to the respective planned demands 214.

A tool allocator 224 of the computer 208 may receive the new demands 220 from the demand archive 222 and/or directly from the demand generator 218. The tool allocator 224 may be configured for assigning capacities to the new demands 220 in each iteration. To do so, the tool allocator 224 may determine suitable tool-machine combinations 106 from a list of possible machines and possible tools of the production facility 100.

Instead of determining the tool-machine combinations 106 by randomly combining items from the list, the tool allocator 224 may determine a priority for each item, i.e., for each possible machine and each possible tool, by applying a set of priority rules 226 and may combine the items according to their respective priority. For example, the tool allocator 224 may determine the tool-machine combinations 106 by selecting the items in a descending order beginning with the item having the highest priority. The priorities of the remaining items may be recalculated based on the priority rules 226 after each selection step. The priority rules 226 are described in more detail below.

The result of a single iteration may be a table in the below format (for greater clarity, only the first three rows of the table are shown):

| | **CombinationNo** | **Machine** | **Tooling** | **Load** | **CapacityRemain** | **UnAssignDemand** |
|---|---|---|---|---|---|---|
| **1** | 733 | 8166 | LC | 1.000 | 0.000 | 0.953 |
| **2** | 7 | 112 | LC | 0.953 | 0.047 | 0.000 |
| **3** | 6 | 112 | T20 | 0.047 | 0.000 | 9.361 |

In this example, the resources are toolings LC, T20, also called tools above, which may be combined with machines 112, 8166. Each tooling-machine combination may have a unique combination number ("CombinationNo") and may be associated with a load value ("Load"), which indicates a capacity utilization of the respective machine, a remaining capacity value ("CapacityRemain"), which indicates a remaining capacity of the respective machine, and/or an unassigned demand value ("UnAssignDemand"), which indicates a remaining demand for the respective tooling.

The calculation procedure may start with a remaining capacity value of 1 for each machine, which means that both machines have an initial capacity of 100 percent. In this example, the initial demand for tooling LC corresponds to a capacity of 1.953 and the initial demand for tooling T20 corresponds to a capacity of 9.408.

Referring to row 1 of the above table, tooling LC is combined with machine 8166 and uses its entire capacity (see column "Load"). Accordingly, the remaining capacity of machine 8166 changes to 0 (see column "CapacityRemain") and the initial demand for tooling LC is reduced by 1. The remaining demand for tooling LC, which may also be referred to as "demand gap", is calculated with 1.953 - 1 = 0.953 (see column "UnAssignDemand").

After this first allocation, "CapacityRemain" of machine 8166 and "UnAssignDemand" of tooling LC are updated in all combinations, i.e., machine 8166 with other tooling and/or tooling LC with other machines. Then the respective priorities of the combinations are recalculated according to the priority rules and the combinations of row 2 are determined for the next allocation.

Referring to row 2 of the above table, the remaining demand of 0.953 for tooling LC is now assigned to machine 112. Accordingly, the remaining capacity of machine 112 changes to 1 - 0.953 = 0.047 and the remaining demand for tooling LC is reduced to 0.

Referring to row 3 of the above table, the remaining capacity of machine 112 is now assigned to tooling T20. Accordingly, the remaining capacity of machine 112 changes to 0 and the remaining demand for tooling T20 changes to 9.408 - 0.047 = 9.361.

The calculation algorithm may go through all machines and toolings until either the remaining capacity of each machine or the remaining demand of each tooling is fully assigned, i.e., is reduced to 0. The result of a single iteration as shown in the above table may be a table with 200 to 250 rows.

It may be that a table in a current iteration is generated depending on a table of a previous iteration.

The tool allocator 224 may further be configured for generating a roll-out plan 228 that specifies which tool-machine combination 106 needs to be rolled out at which future time period. To do so, the tool allocator 224 may determine a respective roll-out time for each tool-machine combination 106. "Roll-out time" in this context may mean an availability status of each tool-machine combination 106, such as "immediately available", "shortly available" or "possibly available".

In particular, the tool allocator 224 may be configured for generating the roll-out plan 228 in such a way that a total number of tool-machine combinations 106 to be rolled out, i.e. a total maintenance effort over the future time periods, is as low as possible. This is achieved by combining tool-machine combinations 106 from different iterations considering their respective estimated roll-out time and/or availability status.

The resulting roll-out plan 228 may be stored in a roll-out plan archive 230, which may be stored on the central server 206.

The database 202 may additionally comprise further information 232 concerning the production facility 100, which may additionally be used by the tool allocator 224 for generating the roll-out plan 228. Such further information may comprise an offload information indicating which of the tools 104 are potentially available at external suppliers for satisfying the respective demands 212 and/or 220, a list of possibly and/or actually available tool-machine combinations 106 and/or a current status of each tool 104.

In the following, the priority rules 226 are described in more detail.

For example, the set of priority rules may comprise a first priority rule 226a, a second priority rule 226b, a third priority rule 226c, a fourth priority rule 226d and a fifth priority rule 226e. The five priority rules 226a to 226e may be applied one after another in a hierarchical order beginning with the first priority rule 226a and ending with the fifth priority rule 226e.

The first priority rule 226a may be configured for determining the priority of each tool 104 based on the offload information (see above), such that tools 104 which can be provided by an external supplier have lower priorities than tools 104 which are only available at the production facility 100.

The second priority rule 226b may be configured for determining the priority of each machine 102 according to the machine categories A, B, C, D. In particular, the priorities may be determined such that machine category D has the highest priority and that machine category A has the lowest priority. Machine category B may have a lower priority than machine category C.

The tool allocator 224 may be configured for determining a number of available machines 102 for each tool 104 based on the further information 232 and/or the forecast data 204. The third priority rule 226c may then be used for determining the priorities of the tools 104 from the corresponding numbers of available machines 102. In particular, the third priority rule 226c may determine the priorities in such a way that tools 104 with lower numbers of available machines 102 have higher priorities than tools 104 with higher numbers of available machines 102.

Additionally or alternatively, the tool allocator 224 may be configured for determining a number of available tools 104 for each machine 102 based on the further information 232 and/or the forecast data 204. The fourth priority rule 226d may then be used for determining the priorities of the machines 102 from the corresponding numbers of available tools 104. In particular, the fourth priority rule 226d may determine the priorities in such a way that machines 102 with lower numbers of available tools 104 have higher priorities than machines 102 with higher numbers of available tools 104.

The fifth priority rule 226e may be configured for determining the priority of each tool 104 depending on the respective planned demand 214 and/or new demand 220 for the tool 104. In particular, the priorities may be determined in such a way that tools 104 with lower demands 214 and/or 220 have higher priorities than tools 104 with higher demands 214 and/or 220.

It has to be noted that type, number and/or order of the priority rules 226 may vary depending on the use case.

Fig. 3 shows a flow diagram for a method for allocating the tools 104 to the machines 102 of the production facility 100. The method may be performed by the computer 208 of the resource allocation system 200.

In step 310, the forecast data 204, which indicate the planned demands 214 and the demand deviations 216 for the tools 104, are received at the computer 208.

In step 320, the new demands 220 for the tools 104 are generated by the computer 208 from the planned demands 214 and the demand deviations 216 in several iterations.

In step 330, capacities are assigned to the new demands 220 in each iteration by determining tool-machine combinations 106 by the computer 208. To do so, a priority is determined for each tool 104 and each machine 102 based on the set of priority rules 226, 226a-226e, and the tool-machine combinations 106 are determined by combining the tools 104 and the machines 102 according to the priorities.

In step 340, the roll-out plan 228, which assigns tool-machine combinations 106 to be rolled out to future time periods, is generated by the computer 208 from the resource-machine combinations 106 of different iterations and an estimated roll-out time for each resource-machine combination 106. The roll-out plan 228 is generated such that the total number of resource-machine combinations 106 to be rolled-out is minimized.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 100: production facility
- 102: machine
- 104: resource, tool
- 106: resource-machine combination, tool-machine combination
- 200: resource allocation system
- 202: database
- 204: forecast data
- 206: central server
- 208: computer
- 212: schedule
- 214: planned demand
- 216: demand deviation
- 218: demand generator
- 220: new demand
- 222: demand archive
- 223: demand range
- 224: tool allocator
- 226: priority rule
- 226a: first priority rule
- 226b: second priority rule
- 226c: third priority rule
- 226d: fourth priority rule
- 226e: fifth priority rule
- 228: roll-out plan
- 230: roll-out plan archive
- 232: further information
- A-D: machine category

## Claims

1. A method for allocating resources (104) to machines (102) of a production facility (100), the method comprising:
receiving forecast data (204) indicating planned demands (214) and demand deviations (216) for the resources (104);
generating a new demand (220) for each resource (104) from the planned demand (214) and the demand deviation (216) of the resource (104) in several iterations;
assigning capacities to the new demands (220) in each iteration by determining resource-machine combinations (106), wherein a priority is determined for each resource (104) and each machine (102) based on a set of priority rules (226; 226a, 226b, 226c, 226d, 226e), wherein the resource-machine combinations (106) are determined by combining the resources (104) and the machines (102) according to the priorities; and
generating a roll-out plan (228) assigning resource-machine combinations (106) to be rolled out to future time periods, wherein the roll-out plan (228) is generated from the resource-machine combinations (106) of different iterations and an estimated roll-out time for each resource-machine combination (106) such that a total number of the resource-machine combinations (106) to be rolled-out is minimized.

2. The method of claim 1,
wherein the set of priority rules (226; 226a, 226b, 226c, 226d, 226e) comprises a first priority rule (226; 226a) for determining the priority of each resource (104) depending on whether or not the resource (104) can be provided by an external supplier, such that resources (104) which can be provided by an external supplier have lower priorities than resources (104) which cannot be provided by an external supplier.

3. The method of claim 1 or 2,
wherein the machines (102) of the production facility (100) are assigned to different machine categories (A, B, C, D), wherein machines (102) of a lower machine category (A, B, C, D) have a lower machining precision and/or are compatible with a lower number of resources (104) than machines (102) of a higher machine category (A, B, C, D);
wherein the set of priority rules (226; 226a, 226b, 226c, 226d, 226e) comprises a second priority rule (226, 226b) for determining the priority of each machine (102) depending on the machine category (A, B, C, D) of the machine (102), such that machines (102) of a lower machine category (A, B, C, D) have higher priorities than machines (102) of a higher machine category (A, B, C, D).

4. The method of one of the previous claims,
wherein a number of available machines (102) is determined for each resource (104);
wherein the set of priority rules (226; 226a, 226b, 226c, 226d, 226e) comprises a third priority rule (226, 226c) for determining the priority of each resource (104) depending on the number of available machines (102) for the resource (104), such that resources (104) with lower numbers of available machines (102) have higher priorities than resources (104) with higher numbers of available machines (102).

5. The method of one of the previous claims,
wherein a number of available resources (104) is determined for each machine (102);
wherein the set of priority rules (226; 226a, 226b, 226c, 226d, 226e) comprises a fourth priority rule (226, 226d) for determining the priority of each machine (102) depending on the number of available resources (104) for the machine (102), such that machines (102) with lower numbers of available resources (104) have higher priorities than machines (102) with higher numbers of available resources (104).

6. The method of one of the previous claims,
wherein the set of priority rules (226; 226a, 226b, 226c, 226d, 226e) comprises a fifth priority rule (226, 226e) for determining the priority of each resource (104) depending on the planned (214) and/or new demand (220) for the resource (104), such that resources (104) with lower planned (214) and/or new demands (220) have higher priorities than resources (104) with higher planned (214) and/or new demands (220).

7. The method of one of the previous claims,
wherein the new demand (220) of each resource (104) is generated by randomly selecting a value from a demand range (223) defined by the planned demand (214) and the demand deviation (216) of the resource (104).

8. The method of one of the previous claims,
wherein the demand deviations (216) are calculated from historic planned demands and historic actual demands with respect to the historic planned demands.

9. The method of one of the previous claims,
wherein the resource-machine combinations (106) in a current iteration are determined depending on resource-machine combinations (106) from a previous iteration.

10. The method of one of the previous claims,
wherein each resource (104) is a specific tool to be used by at least one of the machines (102); and/or
wherein each machine (102) is a laser drilling machine adapted for drilling holes in circuit boards.

11. A data processing device (208) comprising means (218, 224) for carrying out the method of one of the previous claims.

12. A computer program comprising instructions which, when the computer program is executed by a computer (208), cause the computer (208) to carry out the method of one of claims 1 to 10.

13. A computer-readable medium comprising instructions which, when executed by a computer (208), cause the computer (208) to carry out the method of one of claims 1 to 10.
